# EUROPEAN PATENT APPLICATION

(11) **EP 2 518 736 A1**
(43) Date of publication of application: **31.10.2012**
(21) Application number: 11164332.6
(22) Date of filing: 29.04.2011
(51) Int. Cl.: H01B 7/08

(54) **Cable assembly comprising a flexible support made from a textile material**

(71) Applicant: Tyco Electronics Nederland B.V., 5222 AR 's-Hertogenbosch (NL)
(72) Inventor: Vermeulen, Wilfred, 5473 EL, Heeswijk-Dinther (NL); Van Tilburg, Jan, 5345 GJ, Oss (NL)
(74) Representative: Grünecker, Kinkeldey, Stockmair & Schwanhäusser

(57) **Abstract**

The present invention relates to a cable assembly (1) comprising at least two conductor strands (2) that are secured to a flexible support (3) as well as a method for producing a cable assembly (1). According to the present invention, a flexible cable assembly that is easy to manufacture is achieved in that the flexible support (3) is made from a textile material (4) into which the conductor strands (2) are integrated. The method of manufacturing such cable assembly is easy and allows to use a large variety of materials by comprising the steps of integrating at least two conductor strands (2) in a predefined conductor pattern (12) into a flexible support (3) made from a textile material (4) and shaping the textile material (4) into the assembled state of the cable assembly (1).

## Description

The present invention relates to a cable assembly comprising at least two conductive strands /conductors that are secured to a flexible support. The present invention further relates to a method for producing the cable assembly comprising the steps of securing at least two conductive strands / conductors in a predefined conductive pattern to a flexible support.

Currently, in cable assemblies for transporting data or power stranded wires are used. Manufacturing such cable assemblies as cable harnesses is a time consuming and difficult exercise. Special tools have to be developed, such as lay-out boards, and made for each individual harness. The individual wires have to be held together by a wrapping or coating, which is also a time consuming and operator sensitive operation. The wrapping is also adding stiffness to the cable, making it less flexible. Hence, the construction of cables is cost, material and labour intensive.

Traditional manufacturing methods use different process steps to build the cable, such as drawing and extrusion equipment for conductors, taping equipment for shield, braiding equipment for the braid, and extrusion equipment for the jacket. Theses processes require specific material properties and the range of possible materials that can be used is limited.

In view of the above, the object of the present invention is to provide a flexible cable assembly that is easy to manufacture and to provide a method of manufacturing such cable assembly that is easy and allows a large variety of materials to be used.

The above mentioned cable assembly solves this problem in that the flexible support is made from a textile material, into which the conductor strands or conductors are integrated. A large number of textile materials are available that are very flexible, yet durable and thus contribute to an improved flexibility of the cable assembly according to the present invention.

The method of the present invention solves this problem by the steps of: securing at least two conductor strands or conductors to a flexible support made from a textile material, arranging the conductor strands or conductors in a predefined conductor pattern, and shaping the textile material into the cable assembly.

According to the present invention, a textile material refers to a flexible material consisting of a network of fibres. The different natural and synthetic fibres that can be used and be arbitrarily combined with one another allow a flexible support to be selected that has the properties necessary for guaranteeing functionality of the cable assembly to be produced. Further, a lot of textile materials can be used that are natural materials and thus environmentally friendly.

The solutions according to the invention can be combined as desired and further improved by the following embodiments that are in each case advantageous on their own.

For integrating the conductor strands or conductors in the textile material, it is possible that the conductor strands or conductors are woven into the textile material.

By weaving the conductor strands or conductors into the textile material, the individual conductor strands or conductors can be located at the intended position. In particular, the conductor strands or conductors can be secured to the flexible support in a defined conductor pattern, allowing an easy manufacturing of, e.g. cable harnesses of a flat-type cable or even "PCB"-like cable harnesses, wherein the individual conductive strands or conductors are running such that terminating the strands or conductors to one or more connectors at each end or to an electrical device is facilitated and specifically designed for the intended purpose. This contributes to the great versatility of the cable assembly according to the present invention.

Furthermore, the present invention allows for an easy assembling of parallel pairs, which, according to an embodiment, can be achieved in that the conductor pattern is composed of two conductive strands forming the cable pair that are arranged side by side in the textile material. Manufacturing a flat-type cable that is very flexible and can be produced with a nearly unlimited number of parallel wires can be easily performed in an embodiment, wherein the conductor pattern is composed of a plurality of conductor strands that are arranged substantially in parallel. Since the fibre material, of which the flexible textile material is composed, is generally very thin, the parallel conductor strands can be placed adjacent to one another at a very small distance, allowing for a very compact and ultra-flat type of cable harness.

One way to arrange the conductor strands in a predetermined conductor pattern is to use a Jacquard weaving machine making the automatic production of unlimited varieties of pattern possible. Patterning the conductor strands in the woven assembly can also be done by other techniques.

In a further embodiment, the cable assembly of the present invention can be easily cut to the desired length by cutting, for example using mechanical or laser cutting. Also, the tails of the conductors can be cut as required. The production method can further be improved by using the whole width of the textile support material and weaving a plurality of predefined cable patterns side by side and then cutting the textile material in the longitudinal direction for separating the individual patterns. Thereby, the amount of waste that is produced can be reduced.

The present invention also facilitates the termination of the conductor strands, without the need of organizing the individual conductor strands since these are arranged and secured to the flexible support in the predefined conductor pattern. By patterning the conductor strands, each of the strands can enter and exit the textile support material at the desired position facilitating the termination of the strands. Also, the strands can be combined outside the fabric and crimped to one contact easily. The flat design of the cable assembly can be terminated using piercing types of connectors, such as insulation displacement connectors, that can be easily electrically connected with the strands of the cable assembly according to the present invention.

According to a further embodiment, the textile material can be a woven fabric, which is a simple and well established method and allows an arbitrary combination of different fibre materials to be combined in the woven fabric. Alternatively, a none-woven fabric can likewise be used as textile material for the flexible support.

One advantage of the present invention is the versatility of the support material so that the properties of the support can be specifically selected and adapted for the intended use of the conductor strands used in the cable assembly. For example, it is difficult and expensive to design and manufacture dynamic cable assemblies that are used in environments with a lot of movements, such as robots. These flat cables must be very flexible, yet durable. By using a textile material as flexible support, it is possible to use specific, very strong and resistant fibres, such as aramide fibres like Kevlar or Nomex to increase the lifetime of the dynamic cable assemblies and still have very good flexibility. Additionally or alternatively, the textile material can be strengthened by choosing a corresponding weaving pattern.

One problem with optical fibre conductors is that the thermal properties of the glass fibres are different from the thermal properties of the material that is commonly used in cables or optical flexible foils. When these materials start to shrink, glass fibre does not or to a lesser extent so that the fibre "grows" out of the cable resulting into a micro-bend inside the connector which leads to losses in the data transfer. By weaving an optical fibre into a flexible support made from a textile material, the fibres of the textile materials can be selected to match with the thermal properties of the optical glass fibres limiting the problem of micro-bend-formation. It is also possible to make a hybrid type of patterns for a combination of optical fibre and electrical wires in a single cable assembly. For example, at least two of the conductor strands are individually selected from an electrical wire and an optical fibre. Even different types of fibres, multi-mode or single-mode and conductor materials, sizes, etc. can be used.

Principally, the fabric of the textile material can be composed of a material selected from the group comprising cotton, hemp, jute, flax, ramie, sisal, animal fibres, mineral fibres, rayon, modal, lyocell fibres, cellulose fibres, silica fibres, polymer fibres like nylon, aramide fibres, or a combination thereof. The material of the fabric is, however, not limited to this list of possible materials, as long as a textile can be formed from the fibre that has the desired properties.

Using a specific material or a combination of specific fibre materials allows to functionalize the textile material, the textile material forming the flexible support of the cable assembly in defined areas, in the following called zones. In one embodiment, the flexible support may comprise a stabilization zone having an improved wear resistance compared to the support outside the stabilization zone. The stabilization zone can be manufactured by adding very resistant and strong fibres, such as aramide fibres like Kevlar or Nomax that provide the improved wear resistance. The stabilization zone may for example be that area of the flexible support, where the conductor strands are arranged or the areas exposed to the outside that provide the protective part of the cable assembly. This allows for, e.g., a light weight, high durable and ultra flexible cable assembly that is particularly suited for dynamic applications such as robotics.

In a further embodiment, the flexible support may comprise an electromagnetic shielding zone. In this shielding zone, the textile material has conductive properties. This is an easy and simple way to provide an electromagnetic shielding by forming a barrier made of a conductive textile material in the shielding zone. In one embodiment, the shielding zone can be provided by adding conductive fibres, such as metallic yarns in those areas of the textile material that shall constitute the shielding zone.

In a further embodiment, the flexible support may comprise an electrically isolating jacket zone. In the jacket zone, the textile material may comprise fibres that are of a material that are very good electrical insulators, such as nylon or silica. Of course different zones can be combined in one, for example a stabilization and jacket zone.

Each of the above exemplary functionalized zones of the textile material may support conductor strands, for example by weaving the conductor strands into the zones directly. In the following, the part of the textile material, where the conductor strands are supported is called support or supporting zone.

Alternatively, the textile material may also comprise one or more of the functionalized zones without conductor strands, for example adjacent to the area where the conductor strands are received. For bringing the functionalized zones into interaction with the conductor strands, the textile material may be shaped by wrapping and/or folding it into the assembled state of the cable assembly. For example, the shielding zones may be provided adjacent to the section where the conductor strands are supported and is then folded on top and/or below the supporting zone, where the conductor strands are arranged. In one embodiment, the cable assembly may be a flat-type cable, in whose support zone the plurality of conductor strands are arranged substantially parallel and side by side along the longitudinal direction of the cable assembly. In the width direction, adjacent to each outer conductor strand of the plurality of parallel conductor strands, a shielding zone is designed. For shielding all of the conductor strands, one of the shielding zone is folded on top of the support zone and the other shielding zone, at the opposite side is folded beneath the support zone so that each of the conductor strands is surrounded by the shielding zone, thus shielded against electromagnetic radiation from the outside. Alternatively, the shielding zone could be provided at only one side of the supporting zone and then wrapped or folded at least once around the pattern of the conductor strands. Zones that are wrapped and/or folded may comprises fibres that provide elasticity to these zones so that the zones may be stretched, which improves the wrapping.

In a further embodiment, the shaping step in the method of the present invention may comprise shielding at least two, preferably all conductor strands by wrapping and/or folding the shielding zone of the textile material, in which the textile material comprises conductive fibres around at least two, preferably all conductor strands. Thereby, the conductor strands of the cable assembly according to the present invention can be easily shielded. For example, a pair of conductor strands that are arranged next to one another may be adjacent to a shielding zone and upon rolling the textile material, the shielding zone may be wrapped around the two conductor strands forming a shielded cable pair.

In a further embodiment of the method according to the present invention, the shaping may comprise wrapping and/or folding an electrically insulating jacket zone of the textile material around the conductor strands and/or a shielding zone coating conductor strands.

By shaping textile material, e.g. by folding or wrapping it around the conductor strands, a cable assembly according to a further embodiment can be easily produced, in which the shielding zone is wrapped and/or folded around the conductor strands and/or the jacket zone is wrapped and/or folded around the shielding zone covering the conductor strands.

In this way, it is possible to provide a cable assembly having an isolated jacket and shielded connector strands placed inside the cable jacket. For example, the cable assembly may be composed of a supporting zone having four conductor strands, and optionally two drain wires that all run substantially along the longitudinal direction of the textile material. The connector strands are arranged in two pairs of conductor strands, with the two drain wires between the two groups of cable pairs. The two conductor strands and the drain wires are spaced apart at such a distance that, when rolling the textile material in an enshrouding direction, that corresponds to the width direction running substantially perpendicular to the length direction, each of the drain wires is placed substantially between one of the cable pairs. Furthermore, if the textile material in the supporting zone is provided as a shielding zone as well, a cable assembly can be manufactured having two shielded parallel conductor pairs with drain wires. Furthermore, a jacket zone may be provided after the second cable pair so that, upon further rolling the cable assembly, the shielded cable pairs and drain wires are electrically isolated against the outside and placed in the jacket. This embodiment demonstrates that the present invention overcomes the disadvantages in traditional cable manufacturing, where a cable is designed to be produced in enormous volumes and needs to be cut, stripped and organized and subsequently shielded and overmolded or covered by a jacket in separate production steps that can all be simply done with the present invention by shaping the textile material comprising a defined pattern of conductor strands and functionalized shielding and/or jacket zones.

For keeping the cable assembly in the assembled state, according to an embodiment, the method may comprise the step of fixing the textile material as shaped in the assembled state. In one embodiment, the fixation step may be performed by joining adjacent layers of the wrapped and/or folded flexible support. Such joining may for example be done by stitching or clamping the adjacent layers with commonly available machines. In joining adjacent shielding layers, preferably electrically conductive materials may be used for joining. That is, the joining material is, in one embodiment, adapted to the material of the textile layer that it connects.

The invention will be described hereafter in more detail and in an exemplary manner using advantageous embodiments and with reference to the drawings. The described embodiments are only possible configurations in which, however, the individual features as described above can be provided independent of one another and can be omitted in the drawings.
- Fig 1.: is a schematic perspective view of an exemplary embodiment of the cable assembly;
- Fig. 2: shows a schematic cross-sectional view of the cable assembly of Fig. 1 along the sec-tion line 2-2;
- Fig. 3: is a schematic perspective view of a cable assembly of a second embodiment;
- Fig. 4: is a cross-sectional presentation of the cable assembly according to the second em-bodiment along the section line 4-4;
- Fig. 5: is a schematic top view of a cable assembly according to a third embodiment;
- Fig. 6: is a cut out section of the cable embodiment of Fig. 5;
- Fig. 7: is a photograph of an embodiment of the cable assembly according to the present inven-tion;
- Fig. 8: is a forth embodiment of a the cable assembly shown as a cross-sectional representa-tion;
- Fig. 9: shows a cross-sectional view of the cable embodiment according to Fig. 8 after wrapping the textile material around the conductor strands;
- Fig. 10: is a cross-sectional view of a fifth embodiment of a cable assembly;
- Fig. 11: shows a cross-sectional view of the cable assembly according to Fig. 10 in the assem-bled state;
- Fig. 12: is a schematic cross-sectional representation of a cable assembly according to a sixth embodiment
- Fig. 13 is: a schematic cross-sectional view of a cable assembly according to a seventh em-bodiment;
- Fig. 14: shows a cross-sectional view of the cable assembly according to the seventh embodi-ment in the assembled state;
- Fig. 15: is a cross-sectional representation of the cable assembly according to an eighth em-bodiment;
- Fig. 16: shows a cross-sectional view of the cable assembly according to the eighth embodiment in the assembled state;
- Fig. 17: is the picture of another embodiment of the cable assembly according to the present invention;
- Fig. 18: shows the schematic perspective view of a cable assembly according to a ninth em-bodiment;
- Fig. 19: shows a schematic perspective view of the cable assembly according to the ninth em-bodiment at an intermediate stage during the shaping of the cable assembly, but before reaching the assembled state.

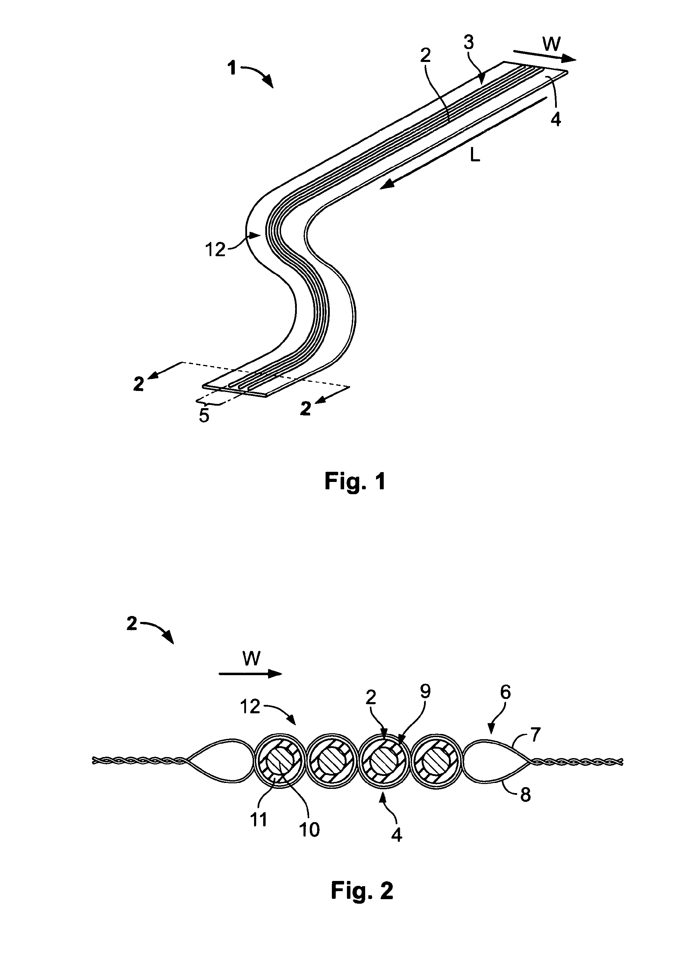

Figs. 1 and 2 show a first embodiment of the cable assembly 1 in a schematic perspective view (Fig. 1) and in cross-sectional view (Fig. 2). The cable assembly 1 comprises a plurality, in the shown embodiment four conductor strands 2 that are integrated in the flexible support 3 made from a textile material 4.

The cable assembly 1 of the first embodiment is designed as a flat-type ribbon cable assembly 1 that is highly flexible. The individual conductor strands 2 are integrated in the textile material 4 by weaving the conductor strands 4 with the weaving pattern of the textile material 4 parallel to each other, side by side the so-called supporting zone 5 of the cable assembly 1. The conductor strands 2 run substantially in the longitudinal direction L of the ribbon cable assembly 1. The supporting zone 5 is defined as the area of the textile material 4, in which the conductor strands 2 are integrated. In the width direction w, the textile material 4 extends laterally over the supporting zone 5 of the cable assembly 1.

The textile material 4 is a woven fabric that is composed of a fibre or yarn material 6. The conductor strands 2 are woven such in the textile material 4 that the fibres 6 interlay with the conductor strands 2. This interlacing structure provides the integration of the conductor strands 2 in the textile material 4.

In the shown embodiment, the textile material 2 is composed of two different fibres, namely an aramide fibre, such as a Nomex or Kevlar fibre 7 and a cotton fibre 8.

The use of an aramide fibre 7 strengthens the textile material providing a high durability and protection against wear so that the ultra-thin highly flexible cable assembly 1 can even be used in dynamic applications, such as a robotics. The use of a cotton fibre 8 or another natural fibre is advantageous from the environmental perspective, since cotton is an environmentally friendly material.

The individual conductor strands 2 of a the cable assembly 1 according to the first embodiment are electrical wires 9 composed of a lead 10 and a thin insulation coating 11 encapsulating the lead 10. By weaving the conductor strands into the textile material 4, it can easily be achieved to secure the conductor strands 2 to the flexible support 3 in a defined conductor pattern 12. In the conductor pattern 12 according to the first embodiment, the conductor strands 2 are arranged substantially parallel to each other and adjacent to one another in the style of the wires of a ribbon cable.

In the following, further embodiments of the cable assembly 1 are presented. For elements having a similar or identical structure/function as elements of a previous embodiment, the same reference signs are used. Further, only the differences between the further embodiments of the cable assembly 1 with respect to the former embodiments are described.

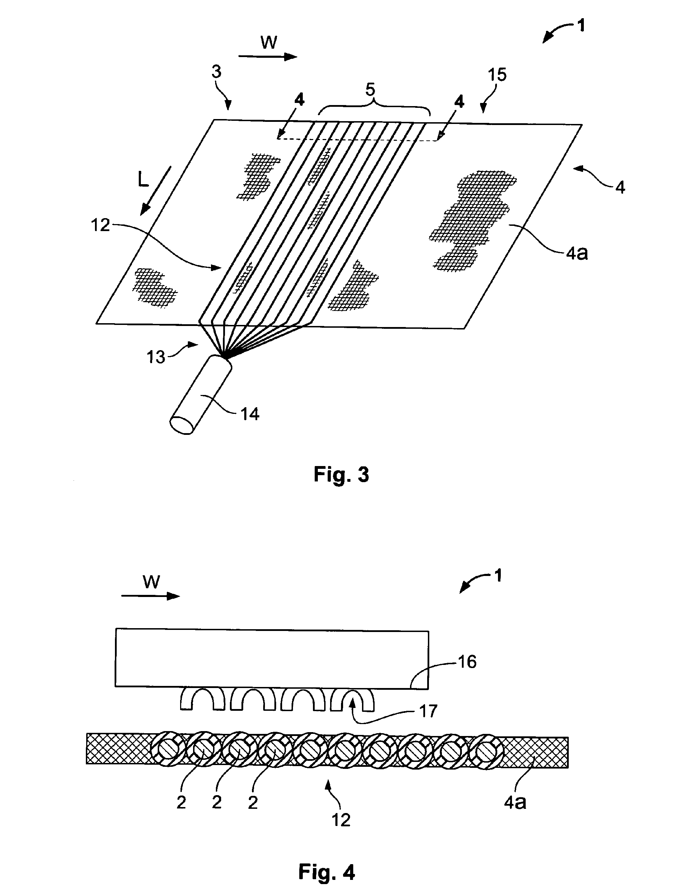

Figs. 3 and 4 show a second embodiment of the cable assembly 1 according to the present invention in a schematic perspective view (Fig. 3) and a cross-sectional view taken along the intersectional line 4-4 (Fig. 4).

The cable assembly 1 of the second embodiment principally corresponds to the ribbon cable assembly 1 of the first embodiment having the plurality of conductors strands 2 woven into the supporting zone 5 of the textile material 4 substantially parallel with each other and running along the longitudinal direction L.

At a first end 13 of the cable assembly 1, the individual conductor strands 2 are brought together outside the woven fabric 4a, of which the textile material 4 of the second embodiment is composed. The combined strands at the first end 13 are crimped together and terminated to a first connector 14.

At the second end 15 of the cable assembly 1, the conductor strands 2 are terminated using a connector of the piercing type, such as an insulation-displacement connector 16 which can easily terminate a plurality, if necessary all, of the cable strands at once by simple forcing the blade portion 17 thereof through the insulation, bypassing the need to strip the wire of its insulation before connecting. Due to the defined conductor pattern 12 in which the conductor strands 2 are arranged and that can be easily adapted to piercing type of connectors 16, the termination of the conductor strands 2 is facilitated.

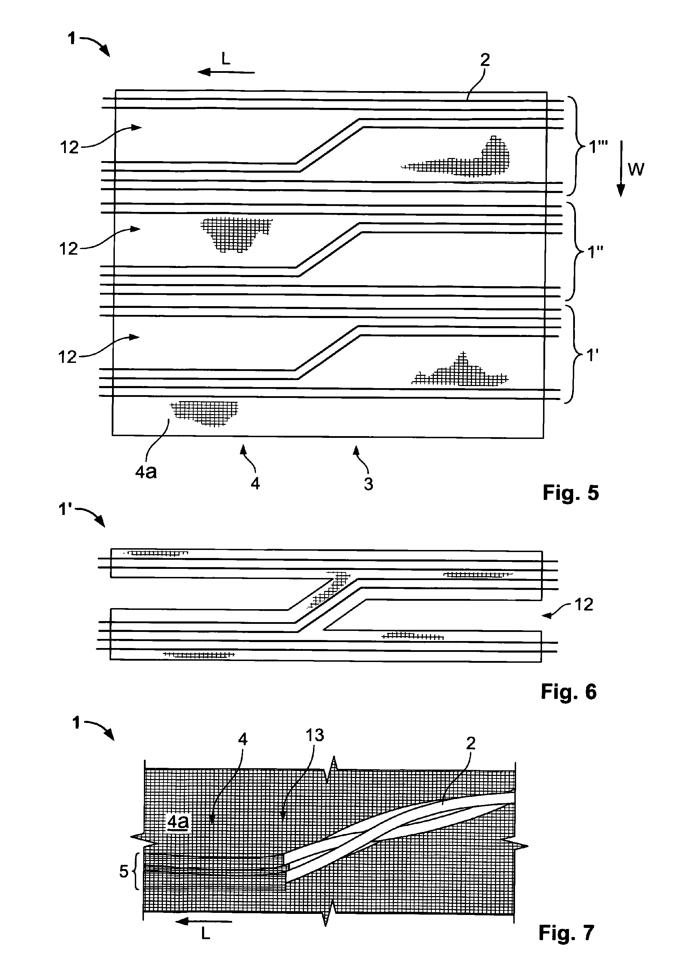

Fig. 5 displays a third embodiment of the cable assembly 1 in the perspective planar top view. The cable assembly 1 is, like the previous embodiments of the ribbon type, designed as a flexible flat cable. The conductor strands 2 are integrated in the flexible support 3 in a defined conductor pattern 12, in which the individual conductor strands 2 substantially run in the longitudinal direction adjacent to one another. The conductor pattern 12 of Fig. 5 differs from the previous patterns in that not all conductor strands 2 run substantially parallel with each other. Rather, the conductor strands 2 are arranged in a more complex pattern resembling a simple wiring flow of a circuit board. This pattern provides a simple example of the possibilities of arbitrarily arranging and building even very complex conductor patterns 12 according to the present invention. Using common weaving technologies, such as Jacquard weaving, even very complex patterns 12 of the conductor strands 2 can be easily woven into the flexible support 3.

Fig. 5 furthermore shows that in a textile material 4 having a sufficient width, a plurality of repeating or different cable assembly units 1', 1 ", 1‴ can be manufactured side by side.

By simply cutting out the individual conductor strand subunits 1', 1 ", 1'", for example using laser cutting, the individual cable assembly units 1', 1 ", 1‴ can be separated from one another and be further processed, for example terminated to one or more connectors 15, 16.

In Figs. 5 and 6, one embodiment of a method for producing a cable assembly 1 is demonstrated, comprising the steps of integrating the multiple conductor strands 2 in the textile material 4 of the flexible support 3 in a predetermined conductor pattern 2 by weaving them into the textile material 4, and shaping the textile material 4 into the cable assembly 1 by cutting out the cable assembly units 1', 1 ", 1'".

Fig. 7 shows a photograph of an exemplary cable assembly 1 at a position, where the individual conductor strands 2 exit the textile material 4. In Fig. 7, it can further be seen in Fig. 7 that the textile material 4 is a woven fabric 4a in whose supporting zone 5, the conductor strands 2 are interlaced with the individual fibres 6.

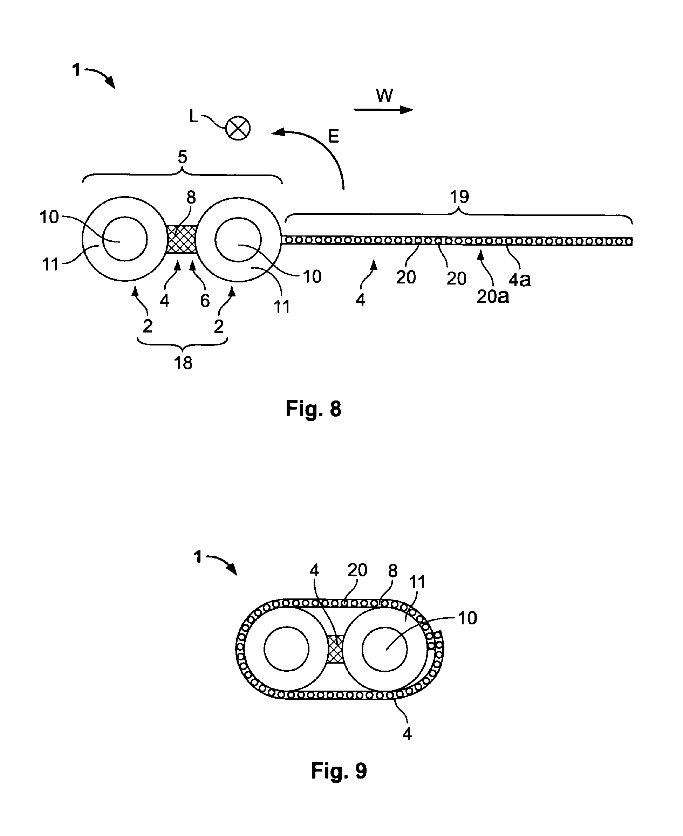

In Figs. 8 and 9, a fourth embodiment of the cable assembly 1 according to the present invention is shown in a pre-assembled state (Fig. 8), prior to shaping the textile material 4, and in the assembled state shown in Fig. 9.

In the cross-sectional view of Fig. 8, it can be seen that two conductor strands 2, each comprising a lead 9 that is surrounded by an insulating coating 11, are arranged substantially parallel and in the longitudinal direction L side by side, adjacent to one another. In the supporting zone 5 of the cable assembly 1, the conductor strands 2 are integrated in the textile material 4 that is composed of a single type fibre material 6 only. The two conductor strands 2 form a cable pair 18.

In the width direction w adjacent to one of the conductor strands 2 forming the cable pair 18, the textile material 4 continues to an extent such that, when wrapped around the cable pair 18 in an enshrouding direction E, the textile material 4 can be wrapped around the cable pair at least once for encapsulating the cable pair 18, as shown in Fig. 9. In the part of the textile material 4 that is adjacent to the cable pair 18, the textile material comprises an elastic metalized yarn 20a interlaced in a structure of the woven fabric 4a. This section of the textile material 4 forms an electromagnetic shielding zone 19 that, due to the metalized yarns 20a, which are conductive fibres 20, protects the cable pair 2 in the assembled state from electromagnetic radiation from the outside.

In the shown embodiment, the conductive fibres 20 are furthermore elastic fibres 20a which provides the shielding zone with an elastic property making it possible to tightly wrap the shielding zone around the cable pair 18, and keep the shielding zone 19 in the assembled state shown in Fig 9. Due to the stretching property of the shielding zone 19 the distance between the conductor and the shield always stays equal, even if the cable assembly 1 bends which is advantageous with respect to impedance of the cable assembly 1.

An alternative to using an elastic metalized yarn is using one metalized fibre and another elastic fibre in the shielding zone 19.

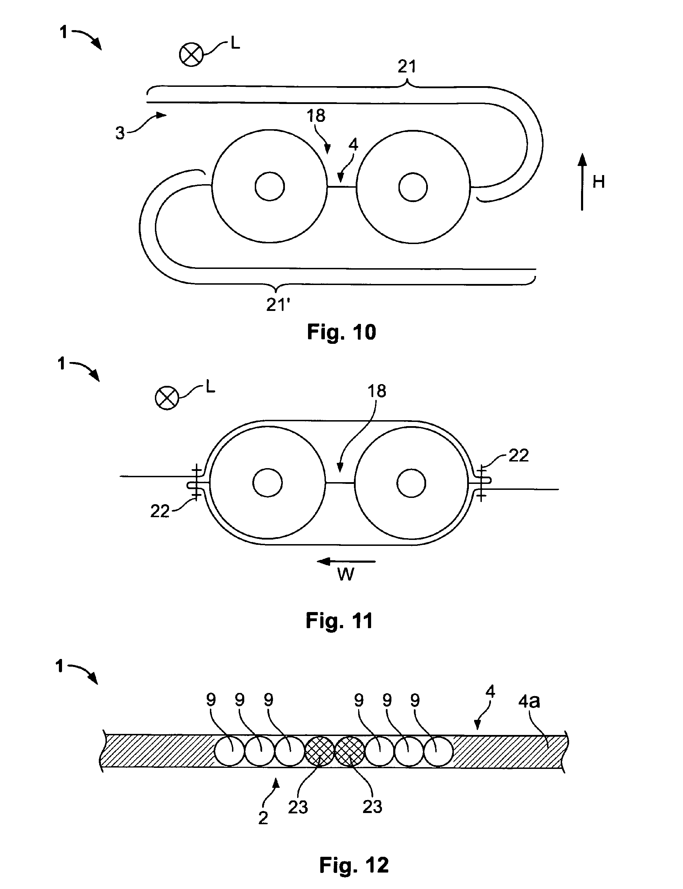

One way to fix the cable assembly 1 in the assembled state is presented in the following with reference to a fifth embodiment of the cable assembly 1 and by reference to Figs. 10 and 11.

The cable assembly 1 of the fifth embodiment generally corresponds to the cable assembly 1 of the embodiment shown in Fig. 8 and is composed of a cable pair 18, whose strands 2 are integrated in the textile material 4 adjacent to one another.

Contrary to the fourth embodiment, however, the cable assembly 1 of the fifth embodiment is not provided with a shielding zone 19. Rather, the flexible support 3 comprises an electrically isolating jacket zone 21 extending in the width direction W of the textile material 4 to both sides of the cable pair 19. The textile material 4 in the jacket zone 21 comprises electrically insulating fibres so that, when the jacket zone 21 is surrounding the conductor strands 2, an insulation thereof against the outside is achieved. For coating the cable pair 18 with the two jacket zones 21, 21' of the textile material 4, one of the jacket zones 21 is folded, in the height direction H of the cable assembly 1, above the cable pair 18, while the other jacket zone 21' is folded, in the height direction H, under the cable pair 18. By shaping the textile material 4 as shown in Fig. 10, i.e. by folding the textile material 4 such that jacket zones 21, 21' are placed as top and bottom layers above and below a cable pair 18, the cable pair 18 can be electrically insulated. For keeping the cable assembly 1 in the assembled state, the adjacent layers of the flexible support, i.e. the top and the bottom layer of textile material 4, respectively, are joined together. In the shown embodiment, the jacket zones 21, 21' are joined by stitching them with a seam 22 running substantially in the longitudinal direction L adjacent to each side of the cable pair 18.

Instead of stitching the adjacent layers of the textile material 4, they could also be stapled or using any other joining technology be fixed in the assembled state.

Even though in the fifth embodiment shown in Figs. 10 and 11, the cable pair 18 is enshrouded using an electrically insulating jacket zone 21, the same folding technique could of course be used to provide a shielding. In this case, the jacket zones 21, 21' would be designed as shielding zones 19 comprising a electrically conductive fibre material. For closing the shielding, an electrically conductive fibre material should be used for the seam 22.

In Fig. 12, a sixth embodiment of the cable assembly 1 according to the present invention is shown in a cross-sectional view. The cable assembly 1 shown in Fig. 4 principally corresponds to the cable assembly of the first or the second embodiment, and is designed as a ribbon cable assembly 1.

Contrary to the embodiment shown in Fig. 2, the cable assembly 1 of Fig. 12 comprises two different types of conductor strands 2, namely electrical wires 9 as well as optical fibres 23 that are arranged in a defined conductor pattern 12 with the individual conductor strands 2 running substantially parallel and adjacent to one another. Thus, the cable assembly 1 is of a hybrid type having electrical wires 9 as well as optical conductors 22.

One problem with optical fibres made from glass is that the thermal properties of glass are different from materials that are commonly used in cables or optical flexible foils. When the commonly used materials start to shrink, the optical fibre 22 "grows" out of the cable resulting in a micro-bend and thus an additional loss of transmission.

By weaving optical fibres 22 as conductor strands 2 into a textile material 4 according to the present invention, this problem of micro-bends can be solved by an appropriate choice of fibre material 6 that matches the thermal property of glass fibres. If, for example, silica yarns are used as yarn 6 of the textile material 4, which have similar thermal properties as glass fibres 22, the problem of micro-bends is solved.

Other functionalised fibres, such as very strong aramide fibres 7, could be added and used in the woven fabric 4a, providing a protection for the fragile optical fibres 22.

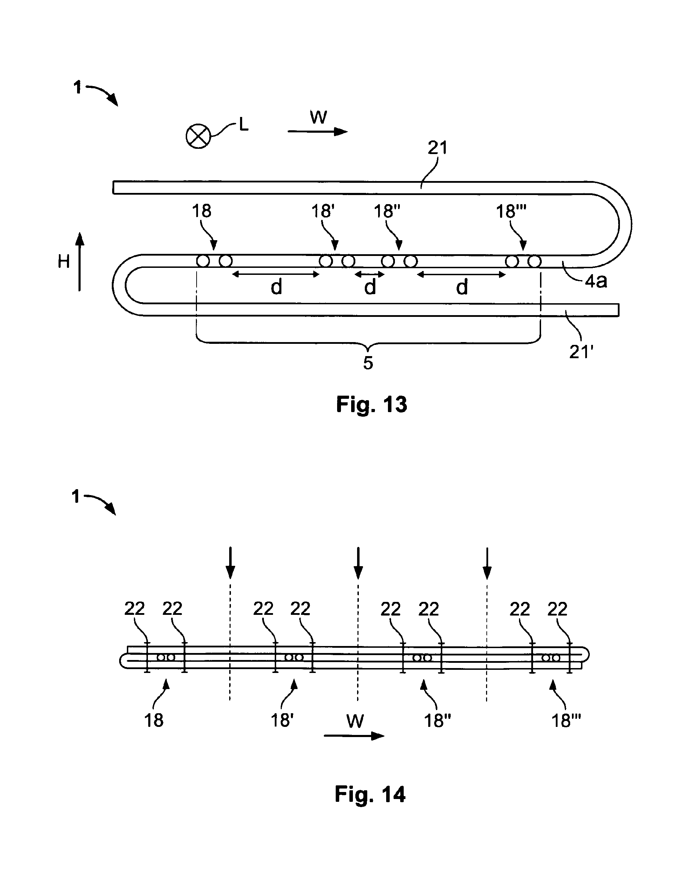

The seventh embodiment of the cable assembly 1 is shown in Figs. 13 and 14, wherein the cable assembly 1 is shown in the assembled state in Fig. 14.

The cable assembly 1 of Fig. 14 principally corresponds to the assembly of the fifth embodiment (Figs. 10 and 11). In the seventh embodiment shown in Figs. 13 and 14, not only a single cable pair 18, but a plurality of cable pairs 18, 18', 18" and 18"' are integrated into the woven fabric 4 in the supporting zone 5. The individual cable pairs 18, 18', 18", 18‴ are spaced from one another at a distance D along the width W of the textile material 4 so that the conductor pattern 12 of the cable assembly 1 according to the seventh embodiment comprises four individual cable pairs 18. Similar to the fifth embodiment, two jacket zones 21, 21' are provided on both sides of the supporting zone 5, which jacket zones 21, 21' are folded above and under the supporting zone 5 for coating the four cable pairs 18, 18', 18", 18"'.

The assembled state of the cable assembly 1 according the seventh embodiment is shown in Fig. 14. In the cable assembly 1 as shown in Fig 14, seams 22 are placed adjacent to one another, thereby forming the jacket around each of the cable pairs 18, 18', 18", 18"', as shown in Fig. 14. Thereafter, the individual cable pairs are separated by cutting the cable assembly 1 and dividing it into subunits at the dashed lines, as indicated by the arrows in Fig. 14. Thereby, a plurality of cable pairs 18, 18', 18", 18‴ can be easily and simultaneously produced using the method.

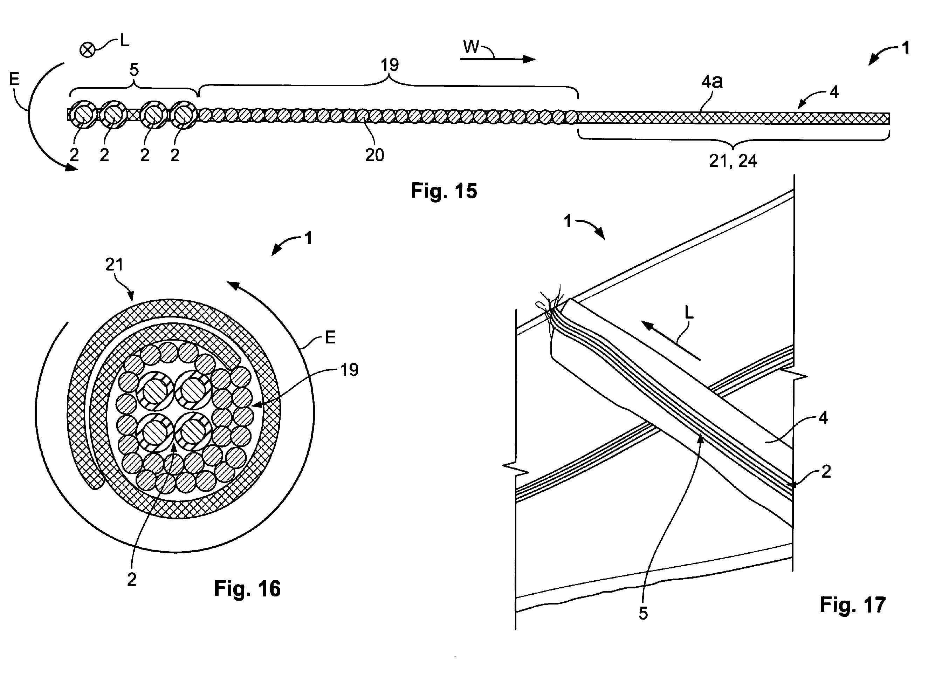

With respect to the eighth embodiment of the present invention shown in Figs. 15 and 16, an embodiment of the cable assembly 1 is shown, that is based on the principal shown in Fig. 8, according to which a part of the textile material is wrapped around the conductor strands, such that a shielded and an isolated cable having four leads is produced.

In the preassembled state shown in Fig. 15, the flexible support 3 is the substantially planar woven fabric 4a. At one lateral side thereof, four conductor strands 2 are woven into the textile material 4. The four conductor strands 2 substantially run in the longitudinal direction parallel and adjacent to each other. The distance between the second and the third conductor strands 2 is larger than the distance between the first and the third and the third and the forth conductor strands. The textile material 4 between the second and the third conductor strands 2, upon shaping the textile material into the assembled state shown in Fig. 16 by wrapping the planar woven fabric 4a in the enshrouding direction E, acts as a hinge allowing the arrangement of the four conductor strands 2 in two rows of two strands on top of each other. In the width direction W adjacent to the fourth of the conductor strands 2, the woven fabric 4a is, at least partially, composed of conductive fibres 20 forming a shield zone 19 following the support zone 5. If continuing to wrap the textile material 4a in the enshrouding direction E, the shield zone 19 is wrapped around all four conductor strands 2 providing a shielding for these strands, as can be seen in Fig. 16.

After the shielding zone 19, in the width direction W, follows a jacket zone 21 composed of an electrically insulating fibre material. If the cable assembly 1 is transferred to the completely assembled state shown in Fig. 16, the jacket zone 21 is wrapped around the shielding zone 19 and consequently also around the support zone 5 with the conductor strands 2.

The eighth embodiment demonstrates that using the method of manufacturing a cable assembly 1, cables having shielded conductors placed inside an outer jacket can be easily produced. For improving the durability of said cable assemblies 1, the jacket zone 21 may also comprise durable fibres having a good wear resistance providing a protecting of the cable assembly 1. In such case, the jacket zone 21 is at the same time a stabilisation zone 24 having an improved wear resistance compared to the support 3 outside the stabilisation zone 24.

Fig. 17 is a picture of an exemplary cable assembly 1, in which conductor strands 2 are arranged substantially running along the longitudinal direction L of the textile material 4 and woven into the textile material 4.

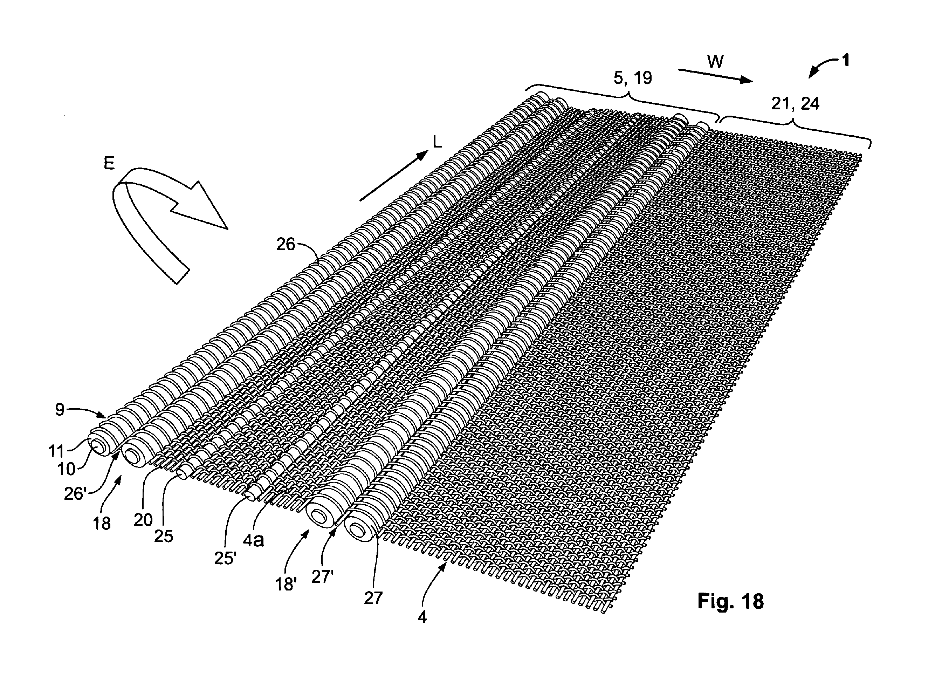

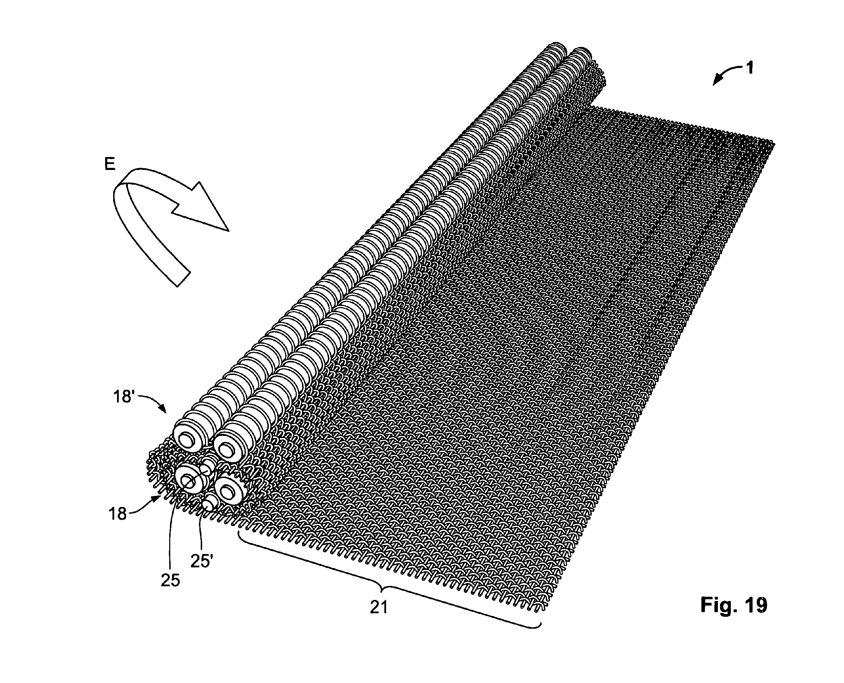

Finally, a ninth embodiment of the cable assembly 1 according to the present invention is shown in Figs. 18 and 19.

The embodiment of Figs. 18 and 19. principally corresponds to the eighth embodiment shown in Figs. 15 and 16.

The ninth of the cable assembly 1 is designed for assembling a cable having two shielded parallel cable pairs 18, 18' with drain wires 25, 25'. In the supporting zone 5 of the textile material 4 between the two cable pairs 18 and 18', two drain wires 25 are arranged. All electrical wires 9 and drain wires 25 are woven substantially along the longitudinal direction L in parallel to each other into the woven fabric 4a. When wrapping the cable assembly 1 along the enshrouding direction into assembled state, the first cable pair 18 at a lateral side of the textile material 4 is folded such that the cable pair 18 is placed on top of the first drain wire 25 such that the drain wire 25 is positioned in the cleavage 26 between the two parallel conductor strands 2 of the cable pair 18. Upon further wrapping the textile material 4, the other, second drain wire 25' is placed adjacent to the cable pair 18 at the cleavage 26' opposite to the cleavage 26 shown in Fig. 18, as can be seen in Fig. 19.

When continuing to wrap the textile material 4 in the enshrouding direction E, the second cable pair 18' is placed on top of the first cable pair 18 such that the first drain wire 25 is positioned in the cleavage 27 between the conductor strands of the second cable pair 18'. Due to the conductor pattern 12 of the two cable pairs 18, 18' and the two drain wires 25, 25', upon wrapping the textile material 4, the two cable pairs are placed on top of each other with one drain wire 25 arranged in the centre of the four conductor strands 2 and the other drain wire 25' adjacent to the cable pair 18.

In the ninth embodiment, the support zone 8, where the conductor strands 2 and the drain wires 25, 25' are integrated into the textile material 4, comprises electrical conductive fibres 20 so that the support zone is at the same time a shielding zone 19. Thus, when wrapping the textile material 4 as shown in Figs. 18 and 19 along the enshrouding direction E, the textile material 4 in the shielding zone 19 at the same time shields the first cable pair 18 from the second cable pair 18'.

The remainder of the textile material 4 that, in the width direction W follows the second cable pair 18 is designed as a jacket zone 21 that is strengthened by using resistant fibres such as aramide fibres and hence, simultaneously provides a stabilisation zone 24 for protecting the cable assembly 1. When continuing to wrap the textile material 4 in the enshrouding direction E, as indicated in Fig. 19, the jacket 21 and stabilisation zone 24 is completely wrapped around the supporting zone 8 with the conductor strands 2 and the drain wires 25, 25', thereby providing an outer insulation and protective jacket of the cable assembly.

## Claims

1. Cable assembly (1) comprising at least two conductor strands (2) that are secured to a flexible support (3), **characterized in that** the flexible support (3) is made from a textile material (4) into which the conductor strands (2) are integrated.

2. Cable assembly (1) according to claim 1, wherein the conductor strands (2) are woven into the textile material (4).

3. Cable assembly (1) according to any one of claims 1 to 2, wherein the textile material (4) is a woven fabric (4a).

4. Cable assembly (1) according to any one of claims 1 to 3, wherein the flexible support (3) comprises a stabilisation zone (24) having an improved wear resistance compared to the support (3) outside the stabilisation zone (24).

5. Cable assembly (1) according to any of one claims 1 to 4, wherein the flexible support (3) comprises an electromagnetic shielding zone (19), in which the textile material (4) comprises conductive fibres (20).

6. Cable assembly (1) according to any of one claims 1 to 5, wherein the flexible support (3) comprises an electrically insulating jacket zone (21).

7. Cable assembly (1) according to any of one claims 1 to 6, wherein the stabilisation zone (24), the shielding zone (19) and/or the jacket zone (21) is/are wrapped and/or folded around the conductor strands (2).

8. Cable assembly (1) according to claim 7, wherein the shielding zone (19) is wrapped and/or folded around the conductor strands (2) and the jacket zone (21) is wrapped and/or folded around the shielding zone (19).

9. Method for producing a cable assembly (1) comprising the steps of:
- integrating at least two conductor strands (2) in a predefined conductor pattern (12) into a flexible support (3) made from a textile material (4), and
- shaping the textile material (4) into the assembled state of the cable assembly (1).

10. Method for producing a cable assembly (1) according to claim 9, wherein the conductor strands (2) are secured and arranged by weaving them into the textile material (4).

11. Method for producing a cable assembly (1) according to claim 9 or 10, wherein the textile material (4) is shaped by wrapping and/or folding.

12. Method for producing a cable assembly (1) according to any one of claims 9 to 11,
wherein the shaping comprises shielding at least two, preferably all, conductor strands (2) by wrapping and/or folding a shielding zone (19) of the textile material (4) around at least two, preferably all conductor strands (2).

13. Method for producing a cable assembly (1) according to any of claims 9 to 12, wherein the shaping comprises wrapping and/or folding an electrically insulating jacket zone (21) of the textile material (4) around the conductor strands (2) and/or the shielding zone (19) coating said conductor strands (2).

14. Method for producing a cable assembly (1) according to any of claims 9 to 13 comprising:
- joining adjacent layers of the wrapped and/or folded flexible support (3) for fixing the textile material (4) in the assembled state.

15. Method for producing a cable assembly (1) according to claim 14, wherein the adjacent layers are stitched together.
